# EUROPEAN PATENT APPLICATION

(11) **EP 2 629 398 A1**
(43) Date of publication of application: **21.08.2013**
(21) Application number: 11832635.4
(22) Date of filing: 14.10.2011
(51) Int. Cl.: H02J 13/00

(54) **MANAGEMENT SYSTEM**

(30) Priority: 15.10.2010 JP 2010233093
(71) Applicant: Sanyo Electric Co., Ltd., Osaka 570-8677 (JP)
(72) Inventor: YAMADA, Ken, Moriguchi-shi Osaka 570-8677 (JP); IKEBE, Hayato, Moriguchi-shi Osaka 570-8677 (JP); SUGATA, Takuji, Moriguchi-shi Osaka 570-8677 (JP); SAKAI, Souichi, Moriguchi-shi Osaka 570-8677 (JP); OKUDA, Yasuo, Moriguchi-shi Osaka 570-8677 (JP)
(74) Representative: Metzler, Volker
(86) International application number: PCT/JP2011/073718
(87) International publication number: WO 2012/050206

(57) **Abstract**

A power management system is configured to comprise: a plurality of power management units (32, 36, 38, 40, 42) that divide power information about a whole facilities complex into power information about a plurality of management areas, and each of which takes partial charge and manages power information about the area pertaining thereto; and a system controller (30) that is connected to each of the power management units (32, 36, 38, 40, and 42) through a communication element, and that is for conducting power management of the whole facilities complex. When failure information is detected from the power information, an alarm signal is output by the system controller (30), and details about the failure information, which are located at a power management unit (32) for a power apparatus, are transmitted to the other power management units via a server (200).

## Description

### TECHNICAL FIELD

The present invention relates to a management system which manages power, and in particular to a management system which manages, by means of a plurality of power management units, power information of a facility group including a plurality of facilities.

### BACKGROUND ART

A management system of power including power from an external commercial power supply, solar light power generated by a photovoltaic module, and charging/discharging power supplied by an electricity storage device is known.

For example, Patent Document 1 discloses, as a management system of power, a structure comprising a commercial power supply, a measuring device which measures power supplied by the commercial power supply, an emergency power supply such as a solar light power supply, an electric meter which monitors an output of the emergency power supply, an electricity storage device which stores excess electric energy, an electric meter which monitors an input and an output of the electricity storage device, a switch which switches on and off supply of electricity to a plurality of loads, and a controller which integrally judges information from the measuring device and electric meters and amount information of supply of electricity to the loads, and switches the switches on and off.

### [Related Art References]

### [Patent Document]

[Patent Document 1] JP 2003-309928 A

### DISCLOSURE OF INVENTION

### [Technical Problem]

In such a system including power-related devices such as an electricity storage device and a photovoltaic module, cooperation between a section which manages the power information of the power-related devices and the other sections is important. When the section which manages the power information of the power-related devices is to be called a power management unit for a power device, an advantage of the present invention is to achieve closer cooperation between the power management unit for the power device and the other sections.

### [Solution to Problem]

According to one aspect of the present invention, there is provided a management system comprising a plurality of power management units which divide power information of a facility group including a plurality of facilities into a plurality of management areas and manage the management areas; a power management unit for a power device, among the plurality of power management units, which manages power information related to a power-related device as the management area; and a control device which is connected to the plurality of power management units by a communication element, which acquires the power information for each of the management areas, and which manages overall power information of the facility group based on the acquired power information, wherein, when the power information acquired from the power management unit includes failure information, the control device transmits to predetermined destinations a plurality of information sets having different amounts of information from each other with regard to the failure information.

### [Advantageous Effects of Invention]

According to the management system which manages power having the above-described structure, closer cooperation between a section which manages power information such as the electricity storage device and a photovoltaic module and the other sections can be achieved.

### BRIEF DESCRIPTION OF DRAWINGS

FIG. 1 is a diagram showing an example of a facility group to which a management system according to a preferred embodiment of the present invention is applied.
FIG. 2 is a diagram for explaining flows of power information and an instruction in a management system according to a preferred embodiment of the present invention.
FIG. 3 is a diagram showing a communication system in a management system according to a preferred embodiment of the present invention.
FIG. 4 is a diagram showing a structure of a charge and discharge management unit for an electricity storage device building facility in a management system according to a preferred embodiment of the present invention.

### BEST MODE FOR CARRYING OUT THE INVENTION

A preferred embodiment of the present invention will now be described in detail with reference to the drawings. In the following description, a storage batter is described as a lithium ion battery, but alternatively, other secondary batteries may instead be used. For example, the storage batterymaybe a nickel-metal hydride battery, a nickel-cadmium battery, or the like. In order to obtain power needed by a load, the electricity storage device is formed by combining a plurality of storage batteries. Therefore, the number of storage batteries forming the electricity storage device can be suitably set according to the specification of a management system which manages power.

In addition, in the following description, an electric supply is described as an external commercial power supply and a photovoltaic module which executes generation of power from solar light, but alternatively, other electric power supplies such as, for example, a wind generator may be used. Moreover, the number, power, or the like described below are merely exemplary for the purpose of explanation, and may be suitably changed according to the power specification of the management system or the like.

Moreover, in the following description, identical reference numerals are assigned to similar elements throughout the drawings, and descriptions are not repeated. In addition, in the description of this text, reference numerals which have been used previously may be used as necessary.

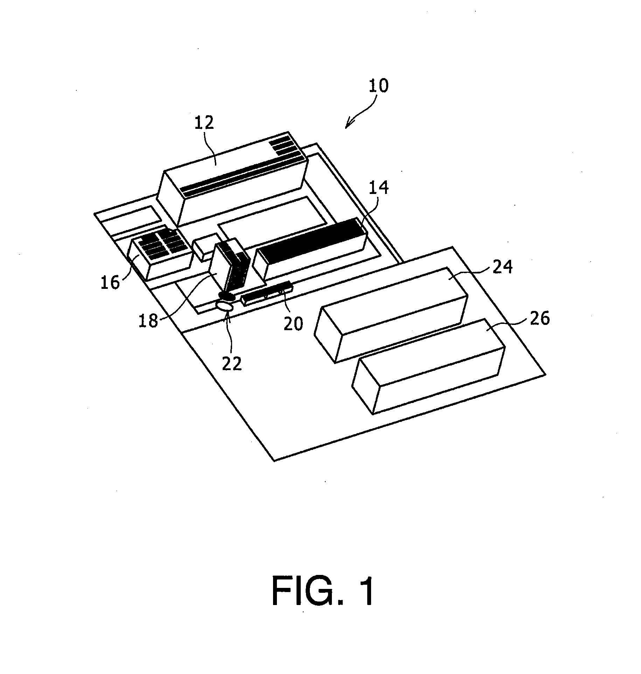

FIG. 1 is a schematic diagram showing a facility group 10 to which a management system 28 is applied. The facility group 10 includes, as facilities, four office buildings including an A building 12, a B building 14, a C building 16, and a D building 18, an electricity storage device building 20 in which a plurality of electricity storage devices are placed, equipment 22 for supplying electricity to a vehicle, and two factory buildings 24 and 26. Although not shown in FIG. 1, the facility group 10 may also include equipment for supplying electricity to a motorcycle battery, a street lamp, an electrical display sign, or the like. Each of the equipment 22 for supplying electricity to the vehicle, the equipment for supplying electricity to the motorcycle battery, the street lamp, and the electrical display signmay be formed to include a photovoltaic module and an electricity storage device.

Each of the four office buildings including the A building 12, the B building 14, the C building 16, and the D building 18, and the equipment 22 for supplying electricity to the vehicle includes a photovoltaic module and an electricity storage device which stores solar light generated power generated by the photovoltaic module. In FIG. 1, black, belt-shaped structures shown on the roofs of the buildings and on an outer wall of the D building 18 represent the photovoltaic modules. In the A building 12, B building 14, and C building 16, shops, kitchens, or the like are located. In the D building 18, DC power lines for using office devices are placed. The photovoltaic module may also be provided on the electricity storage device building 20, but in this description, it is assumed that the photovoltaic module is not provided. Similarly, the photovoltaic module may be provided on the factory buildings 24 and 26, but in this description, it is assumed that the photovoltaic module is not provided. The above-described configuration is merely exemplary for the purpose of explanation, and other configurations may be employed with regard to the placement of the photovoltaic modules, buildings in which the shops and kitchens are located, placement of DC power lines, etc.

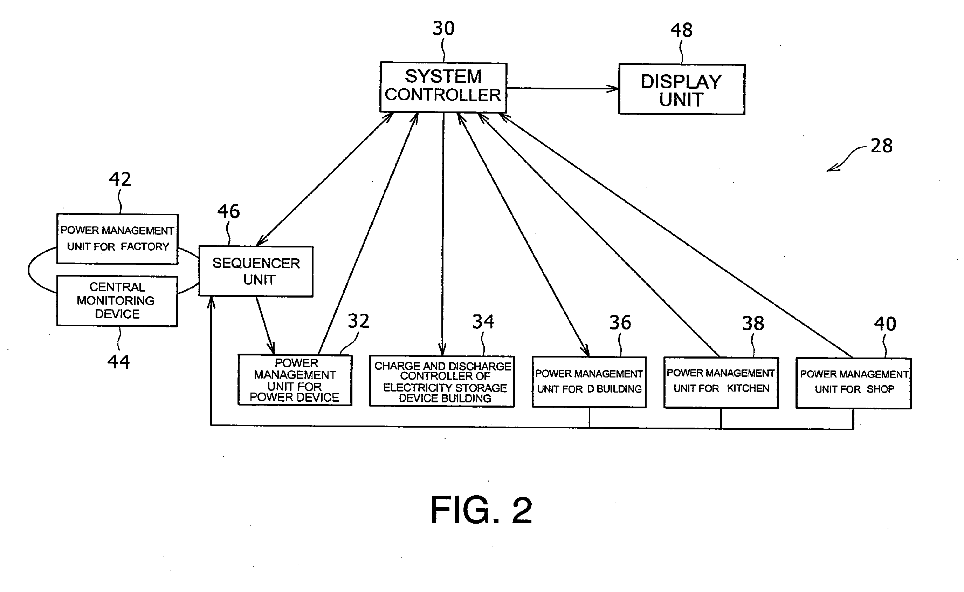

FIG. 2 is a diagram showing flows of power information, an instruction, or the like in the management system 28 which manages power of the facility group 10. Directions of the flows of the power information, the instruction, etc. are shown with arrows.

As shown in FIG. 2, the management system 28 comprises a plurality of power management units, and a system controller 30 which executes overall power management of the facility group 10. The facility group 10 is divided into a plurality of management areas, and different power management units manage power information for different management areas. The system controller 30 is connected to the power management unit by a communication element. FIG. 2 shows, as the plurality of power management units, a power management unit 32 for a power device, a power management unit 36 for the D building, a power management unit 38 for a kitchen, a power management unit 40 for a shop, and a power management unit 42 for the factory. In FIG. 2, a power management unit for the A building 12, a power management unit for the B building 14, and a power management unit for the C building 16 are not shown. Each power management unit is preferably provided so as to not overlap with the management areas of the other power management units, and alternatively, power management units other than those described above may be provided.

The power management unit 32 for the power device has functions to execute management of power information related to the plurality of electricity storage devices distributively placed in the facility group 10, and management of power information related to the photovoltaic modules which are similarly distributively placed, and to transmit the power information to the system controller 30. The electricity storage device and the photovoltaic modules are both power-related devices, and, thus, the power management unit 32 for the power device has a function to manage power information related to the power-related devices.

The power management unit 32 for the power device manages the power information related to the generated power or the like of the photovoltaic module included in the facility group 10 and power information related to charged power, discharged power, a voltage, a current, or the like of the electricity storage device, or the like of the electricity storage device included in the facility group 10. The power information related to the electricity storage device preferably additionally includes information related to a temperature of the electricity storage device. The power information managed by the power management unit 32 for the power device is transmitted to the system controller 30.

The electricity storage device of the electricity storage device building 20 is charged by a power of an external commercial power supply and discharges power which is needed by a load of the facility group 10. Therefore, electricity storage devices in the number to enable securing of a sufficient electricity storage capacity are collectively placed in the electricity storage device building 20. As described, the power information management of the electricity storage device building 20 is important in order to manage the overall power of the facility group 10, and, therefore, of the power management unit 32 for the power device, a portion whichmanages the power information of the electricity storage device building 20 is in particular referred to as a power management unit for the electricity storage device building.

A charge and discharge controller 34 for the electricity storage device building has a function to control charging and discharging of the plurality of the electricity storage devices in the electricity storage device building 20. The charge and discharge control of the electricity storage devices by the charge and discharge controller 34 for the electricity storage device building is executed by a charge and discharge instruction transmitted from the system controller 30.

The power management unit 36 for the D building has a function to manage the power information in the D building 18. The D building 18 includes, as loads, air-conditioning, lighting, office devices, etc. The power information of these loads, such as the power consumption, is transmitted to the system controller 30. Compared to the other office buildings, the D building 18 is assumed to have a larger power consumption of the load. Thus, when the power for the entirety of the loads of the facility group 10 becomes insufficient, an energy saving control instruction is transmitted from the system controller 30 to the power management unit 36 for the D building. FIG. 2 shows a bidirectional arrow for the flow of the information in order to show two directions, for the flow of the power information and for the flow of the energy saving control instruction.

The power management unit 38 for the kitchen has a function to manage the power information in the kitchen located in the office building. The power information of power consumption or the like of kitchen equipment such as cooking devices is transmitted to the system controller 30.

The power management unit 40 for the shop has a function to manage the power information in the shop located in the office building. Power information of the power consumption or the like of air-conditioning and shop devices such as cooling and freezing showcases is transmitted to the system controller 30.

The power management unit 42 for the factory has a function to manage the power information in the factory buildings 24 and 26. The power information such as the power consumption or the like of the factory devices such as a machine tool and an assembling machine placed in the factory buildings 24 and 26 is transmitted to the system controller 30.

A central monitoring device 44 is a device which monitors presence or absence of occurrence of abnormality, such as failure in power status of the factory buildings 24 and 26. The monitored result is transmitted to the system controller 30.

The contents of the power information or the like of the power management unit 32 for the power device affect the operation state of the factory buildings 24 and 26. Therefore, when the power information transmitted from the power management unit 32 for the power device includes failure information, alert information is transmitted from the system controller 30 to the power management unit 42 for the factory and the central monitoring device 44.

A sequencer unit 46 is a PLC (Programmable Logic Controller) connected to each of the photovoltaic modules and power converters distributively provided in the power management unit 42 for the factory, the central monitoring device 44, or the like. Each of the power converters is a DC/AC converter or the like which converts direct current of the photovoltaic module into alternating current. Transmission and reception of information among the power management unit 42 for the factory, the central monitoring device 44, and the system controller 40 are achieved through a communication line via the sequencer unit 46. The power information of the photovoltaic module and the power converter is transmitted to the power management unit for the power device through a communication line via the sequencer unit 46. Therefore, when the power information includes the failure information, the failure information is also transmitted to the power management unit 32 for the power device.

When failure occurs in the power management unit 36 for the D building, the power management unit 38 for the kitchen, and the power management unit 40 for the shop, the failure information is transmitted to the system controller 30 and the sequencer unit 46.

When the failure information is received, the system controller 30 outputs an alert signal to the power management unit 42 for the factory and the central monitoring unit 44 by means of an alert signal outputting unit. The failure information of the power management unit 36 for the D building, the power management unit 38 for the kitchen, and the power management unit 40 for the shop are transmitted via the sequencer unit 46 to the power management unit 42 for the factory and the central monitoring device 44. Therefore, the failure information of the power management unit 36 for the D building, the power management unit 38 for the kitchen, and the power management unit 40 for the shop are transmitted to the power management unit 42 for the factory through two different information transmission routes. A reason for transmitting the failure information to the power management unit 42 for the factory and the central monitoring device 44 is that these devices are considered to be pieces of equipment that are directly or indirectly managed by human hands.

The system controller 30 is a first control device which creates overall power information of the facility group 10 based on the power information transmitted from the power management unit 32 for the power device, the power management unit 36 for the D building, the power management unit 38 for the kitchen, the power management unit 40 for the shop, and the power management unit 42 for the factory. In addition, the system controller 30 has functions to create a charge and discharge instruction for the charge and discharge controller 34 in the electricity storage device building based on the overall power information of the facility group 10, and to transmit the instruction to the charge and discharge controller 34 in the electricity storage device building.

The system controller 30 also monitors for communication abnormalities among the powermanagement unit 32 for the power device, the charge and discharge controller 34 in the electricity storage device building, the power management unit 36 for the D building, the power management unit 38 for the kitchen, the power management unit 40 for the shop, and the sequencer unit 46, which are connected by the communication lines. The system controller 30 has a function to output an abnormality signal when a communication abnormality occurs. The system controller 30 also has a function to notify an abnormality signal related to the communication abnormality to the power management unit 42 for the factory and the central monitoring device 44. The system controller 30 further has a function to transmit the energy saving control instruction for the power management unit 36 for the D building.

The system controller 30 has a function to create, based on the overall power information of the facility group 10, data of the power consumption of the facility group 10, the supplied power from the external commercial power supply, the generated power of the photovoltaic module, and the charge and discharge power in the electricity storage device in the electricity storage device building 20. The system controller 30 additionally has functions to output an alert signal assuming a failure has occurred when the power information includes the failure information, and to output an abnormality signal indicating a communication abnormality when an abnormality has occurred in the transmission route of the power information.

In order to accurately detect that the power information includes the failure information, the power information must be the most recent information of the information that changes with time. If abnormality occurs in the transmission route of the power information, the power information would not be updated from the old power information, and, consequently, the failure information could not be accurately detected and the alert signal could not be accurately output. Therefore, the existence/absence of the communication abnormality is judged according to a predefined communication abnormality judgment standard. The communication abnormality judgment standard can be standardized by existence/absence of the update of the power information.

For a specific method of judgment of the existence/absence of the communication abnormality, a method may be considered in which time information related to the time which is periodically updated is included in the power information transmitted from each of the power management units, and the updated time information related to the time is used. For this purpose, each power management unit is provided with an updating unit which attaches time information related to the update time when the power information is updated, and updates the power information at a periodical update interval which is defined in advance. The system controller 30 comprises a receiving unit which periodically receives the power information from each power management unit, an update monitoring unit which monitors an update state of the time information included in the received power information, and a communication judging unit which judges a communication status with the power management unit based on the update state of the received power information.

When each power management unit attaches the time information related to the update time when the power information is updated, even if the content itself of the power information which is updated and transmitted is the same content as that from the previous updating process, the time information related to the update time is updated. The information related to the time of update is the update time. Therefore, if the time of update received by the system controller 30 is more recent than the previous update time, no communication failure has occurred. Therefore, when the time information is not updated, for the update state of the time information included in the power information transmitted from a certain power management unit, for a time period exceeding a predefined confirmation interval, it is possible to judge that abnormality has occurred in the communication between this power management unit and the system controller 30. The confirmation interval is preferably set to 2 - 3 times the time period between a new update and the previous update of the power information.

The system controller 30 also judges whether or not the power information includes failure information. The failure information includes the alert information transmitted when each power management units judges that failure has occurred, and information where the power management units did not judge that failure has occurred but the system controller 30 has judged that failure has occurred. In order to judge the presence/absence of the occurrence of failure in the system controller 30, a failure occurrence judgment standard may be predefined in the system controller 30, and the system controller 30 can determine the occurrence of the failure by referencing the power information received from each power management unit against the failure occurrence judgment standard. In this manner, by executing the judgment of the presence/absence of the occurrence of failure in a plurality of stages, a further degree of safety can be secured for the system as a whole.

Even if failure information is detected in the state where the communication abnormality has occurred, the failure information may be old information, and accuracy of the failure information may be questionable. Thus, it is also possible to judge whether or not the power information includes the failure information only for the power information received by the system controller 30 in a state where there is no communication abnormality.

The system controller 30 transmits an abnormality signal and an alert signal also to a display unit 48. The abnormality signal and the alert signal transmitted to the display unit 48 may have contents to briefly convey the occurrence such as "communication abnormality has occurred" or "failure has occurred." These signals thus may have simple contents with a relatively small amount of information, targeted to immediately notify the occurrence of the failure.

The display unit 48 is a display which displays an overall power management state of the facility group grasped by the system controller 30. The power management state includes, in addition to the data of the power consumption, self-supplied power, saved amount of energy, CO₂ reduction amount, etc., presence/absence of communication abnormality, and presence/absence of failure occurrence.

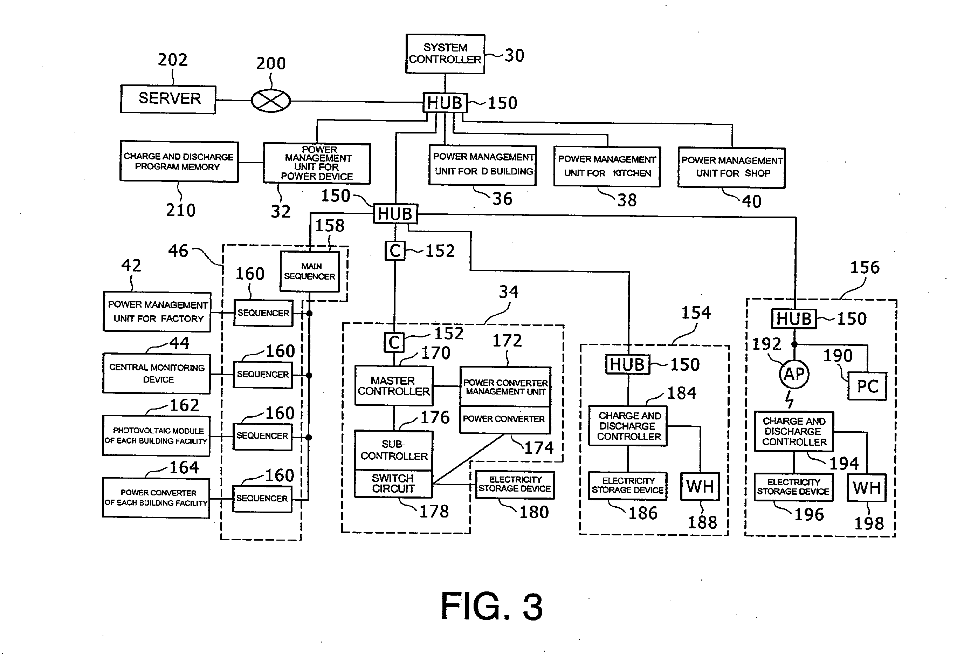

Next, details of a communication system will be described with reference to FIG. 3. FIG. 3 shows a communication system among the system controller 30, the power management unit 32 for the power device, the charge and discharge controller 34 in the electricity storage device building, the power management unit 36 for the D building, the power management unit 38 for the kitchen, the power management unit 40 for the shop, and the sequencer unit 46, and a communication system among a piece of equipment 154 for supplying electricity to a motorcycle battery, and a street lamp 156 which are not shown in FIGs. 1 and 2, and the system controller 30.

The system controller 30, the power management unit 32 for the power device, the power management unit 36 for the D building, the power management unit 38 for the kitchen, and the power management unit 40 for the shop are connected by a LAN (Local Area Network) via a hub (HUB) 150.

The power management unit 32 for the power device manages power information of an electricity storage device 180 located in the electricity storage device building 20, a photovoltaic module 162 in each building, and electricity storage devices placed corresponding to the photovoltaic modules, and, thus, is connected to these buildings by a communication system.

The power management unit 32 for the power device is connected to a charge and discharge program memory 210. The charge and discharge program memory 210 is a memory device which stores a charge and discharge control program for controlling an amount of charge of the electricity storage device in the electricity storage device building 20 and the charging and discharging of the electricity storage device for the photovoltaic module distributively placed in the facility group 10. The charge and discharge controller of each electricity storage device downloads and uses a predetermined control program from the charge and discharge program memory 210 via the power management unit 32 for the power device. Each charge and discharge controller inquires the power management unit 32 for the power device for an updating status of the control program at a predefined inquiry interval, and, when there is an updated version of the control program, the charge and discharge controller downloads the updated version and replaces the old version. In order to judge whether or not the control program has been updated, it is preferable to attach an update history to the control program and store the update history along with the updated control program in the charge and discharge program memory 210.

The charge and discharge program memory 210 may be provided as an internal memory of the management system 28 or may be provided as an external memory of the management system 28. In addition, by storing the control programs of the plurality of the charge and discharge controllers in the charge and discharge program memory 210, the control programs of the plurality of charge and discharge controllers may be managed collectively. Specifically, because the contents of the controls in the plurality of charge and discharge controllers can be managed collectively, cooperation can be achieved in control by the plurality of power management units.

The system controller 30 and the sequencer unit 46 are connected by a LAN via two hubs 150. The sequencer unit 4 6, the power management unit 42 for the factory, the central monitoring device 44, the photovoltaic module 162 of each building, and a power converter 164 of each building can be connected by suitable communication lines.

The system controller 30, the power management unit 32 for the power device, and the charge and discharge controller 34 of the electricity storage device building are connected by a LAN to the second hub 150, and are connected from the second hub with an optical cable via a hub 152 with an optical terminal station. The element referred to by "C" in FIG. 3 represents the hub 152 with an optical terminal station.

The charge and discharge controller 34 of the electricity storage device building comprises a master controller 170, a power converter management unit 172, a power converter 174, a switch circuit 178, and a sub-controller 176. The master controller 170 receives the charge and discharge instruction transmitted from the system controller 30. The power converter management unit 172 manages the power converter 174. The switch circuit 178 is provided between the electricity storage device 180 and the power converter 174. The sub-controller 176 controls an operation of the switch circuit 178, acquires electricity storage device information which is the power information related to the electricity storage device 180, and transmits the electricity storage device information to the power management unit 32 for the power device.

The system controller 30, the power management unit 32 for the power device, and the equipment 154 for supplying electricity to the motorcycle battery are connected by a LAN via three hubs 150. The equipment for supplying electricity to the motorcycle battery comprises a photovoltaic module (not shown in FIG. 3), an electricity storage device 186 which stores the power generated by the photovoltaic module, a power detecting unit (WH) 188, and a charge and discharge controller 184.

The system controller 30, the power management unit 32 for the power device, and the street lamp 156 are connected by the LAN via three hubs 150. The street lamp 156 comprises a photovoltaic module (not shown in FIG. 3) an electricity storage device 196 which stores the power generated by the photovoltaic module, a power detecting unit (WH) 198, and a charge and discharge controller 194.

The street lamp 156 differs from the equipment 154 for supplying electricity to the motorcycle battery in that the hub 150 included in the street lamp 156 and the charge and discharge controller 194 are not connected by the LAN, but rather, an access point (AP) 192 and the charge and discharge controller 194 are connected by exchange of wireless communication. In the street lamp 156, the wireless communication exchange is controlled by a personal computer (PC) 190. Specifically, the system controller 30, the power management unit 32 for the power device, and the personal computer 190 are connected by the LAN, and the access point 192 and the charge and discharge controller 194 are connected by control of the personal computer 190. Therefore, for example, the control program read from the charge and discharge program memory 210 is first downloaded to the personal computer 190, and then, necessary update may be applied to the charge and discharge controller 194.

In this manner, while the charge and discharge controller 184 of the equipment 154 for supplying electricity to the motorcycle battery is directly connected to the power management unit 32 for the power device by the LAN, the charge and discharge controller 194 of the street lamp 156 is connected indirectly to the power management unit 32 for the power device via the personal computer 190. By distinguishingly using the direct connection form and the indirect connection form and distinguishingly using the communication via the LAN and the optical communication, it is possible to transmit and receive data contents and data amounts of the power information, the instruction, etc. corresponding to the target of the charge and discharge control.

The system controller 30 is connected to a server 202 via the hub 150 and a public line network 200. When the alert signal is output from the system controller 30, the server 202 transmits the details of the failure information included in the power information transmitted from the power management unit 32 for the power device to the power management unit 42 for the factory, by means of a public mail communication line. This is because the alert signal which is output by the system controller 30 has a content with a relatively small amount of information targeted to immediately and simply notify the occurrence of the failure, and, thus, the small amount of information is supplemented by transmitting data of the detailed contents through another communication system.

More specifically, when the system controller 30 outputs the alert signal, a transmission instruction unit of the failure information of the system controller 30 sends an instruction to the power management unit 32 for the power device, to cause the server 202 to transmit the details of the failure information. The server 202 is a server in which the devices which can access the server 202 are predefined. The devices which can access the server 202 may be the power management units, including the power management unit 42 for the factory.

The public mail communication line is used when the data are exchanged with the server 202 because, with such a configuration, a dedicated communication line does not need to be provided when the server 202 is to be provided in a remote location. In addition, when the monitoring unit related to the facility group 10 is to be provided at a remote location, the monitoring unit also preferably is able to access the server 202, and, thus, the public mail communication line may be used in this case also.

Because the server 202 can be accessed from each power management unit, the power management units can actively access the server 202 and acquire the detailed information stored in the server 202. Therefore, when the detailed information is unnecessary information for the power management unit, the power management unit does not need to download the unnecessary detailed information having a large amount of data.

As the server 202, the use of a mail server is preferable. Because the mail server is originally provided for transmitting and receiving electronic mails, the communication environment is superior, and countermeasures for disaster are taken as a part of the equipment infrastructure. In addition, a communication indicating that the detailed information has been acquired may be transmitted by the mail server through the electronic mail or the like to each power management unit.

The alert signal which is output from the system controller 30 is transmitted to the sequencer unit 46 via two hubs 150, and is transmitted from the sequencer unit 46 to the power management unit 42 for the factory and the central monitoring device 44. In addition, the failure information is transmitted from the power management unit 36 for the D building, the power management unit 38 for the kitchen, and the power management unit 40 for the shop to the sequencer unit 46 via the LAN.

The transmission of the data from the system controller 30 to the display unit 48 shown in FIG. 2 is achieved by the LAN.

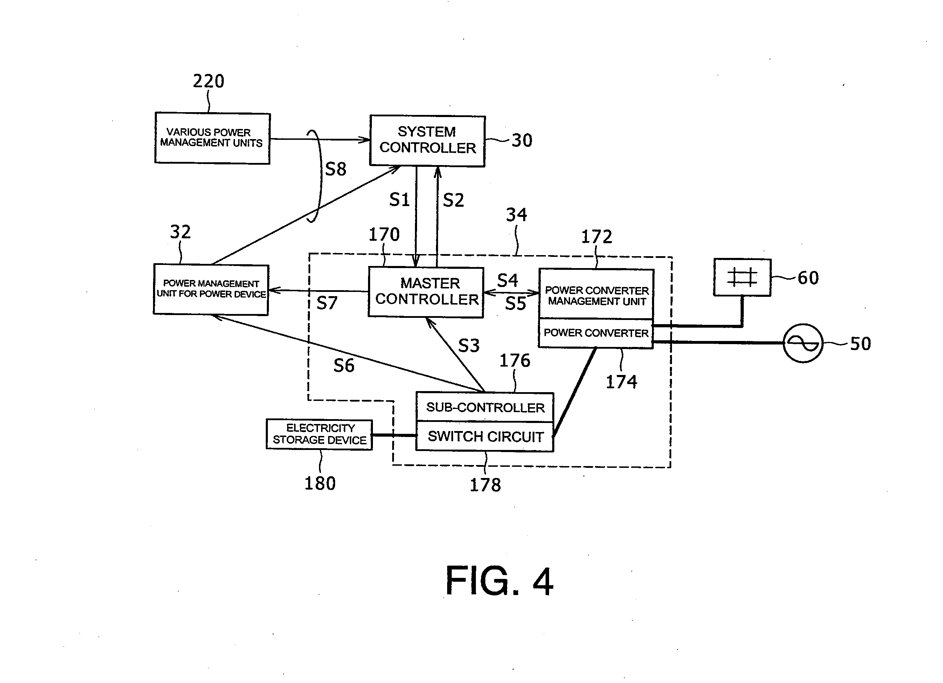

FIG. 4 is a diagram for extracting and explaining a portion in the management system 28 related to the charge and discharge controller 34 in the electricity storage device building.

Here, as the portion related to the charge and discharge controller 34 in the electricity storage device building, the system controller 30, the master controller 170, the sub-controller 176, the power converter management unit 172, the power converter 174, and the switch circuit 178 are shown. The power converter 174 is managed by the power converter management unit 172. The switch circuit 178 is managed by the sub-controller 176, and is connected and placed between the power converter 174 and the electricity storage device 180. Wide solid lines in FIG. 4 represent a flow of power, and arrows shown with narrow solid lines represent a flow of the signals. Reference numerals S1 - S9 represent types of signals.

The system controller 30 receives power management information S8 (a signal S8) from the power management unit 32 for the power device and various power management units 220, and generates a specific charge and discharge plan based on the signal S8. The system controller 30 is a first control device having functions to generate an overall charge and discharge control instruction S1 (a signal S1) according to the charge and discharge plan and to transmit the instruction S1 to the master controller 170. Here, the power management unit 36 for the D building, the power management unit 38 for the kitchen, the power management unit 40 for the shop, the power management unit 42 for the factory, etc. are collectively referred to as the various power management units 220.

The charge and discharge plan generated by the system controller 30 is for charging and discharging the electricity storage device 180 according to a status of the power needed by the load and a state of the electricity storage device 180. The electricity storage device 180 is charged with the power from the photovoltaic module 60 and the external commercial power supply 50.

The master controller 170 is a second control device having functions to generate a group charge and discharge control instruction S5 (a signal S5) based on the signal S1, and to transmit the signal S5 to the power converter management unit 172.

From the master controller 170, an active/inactive checking signal may be periodically transmitted to the system controller 30 as a signal for checking whether or not the system controller 30 is in operation. By employing a configuration where the system controller 30 returns a reception response with respect to the active/inactive signal to the master controller 170, it is possible to check the active/inactive state of the system controller 30. A reason why the master controller 170 is to send the active/inactive signal will now be described. When the transmission timing of the signal S1 sent from the system controller 30 is irregular, there may be a case where the signal S1 is not input to the master controller 170 for a significant length of time. In such a case, it is necessary to judge whether the signal S1 from the system controller 30 is not input to the master controller 170 because the transmission timing of the signal S1 is irregular or the signal S1 is not input because the system controller 30 is not functioning due to failure or the like. For this purpose, the active/inactive signal is transmitted from the master controller 170 to the system controller 30, in order to check the active/inactive state of the system controller 30.

The power converter management unit 172 has functions to receive the signal S5 from the master controller 170 and to manage operations of one or a plurality of the power converters 174. The power converter 174 has a function to execute a power conversion between the alternating current power of the external commercial power supply 50 and a direct current power of the electricity storage device 180, a voltage conversion between a voltage of the photovoltaic module 60 and a voltage of the electricity storage device 180, or a voltage conversion between the voltage of the electricity storage device 180 and a voltage of the load. The power converter 174 is a converter such as a bidirectional AC/DC converter, a bidirectional DC/DC converter, etc., and the type of the converter to be used is selected according to the content of the conversion which is actually executed.

The power converter management unit 172 transmits information indicating a malfunctioning of the power converter 174 to the master controller 170 as power converter management data S4 (a signal S4) . The master controller 170 transmits power converter management data S7 (signal S7) having the same content as the signal S4 to the power management unit 32 for the power device.

The sub-controller 176 executes the charge and discharge control of the plurality of storage battery units forming the electricity storage device 180, and is provided for each storage battery unit. The sub-controller 176 acquires data of a voltage, a current, and a temperature of the storage battery unit. Based on these data, the sub-controller 176 detects a storage battery pack, among the plurality of storage battery packs forming the storage battery unit, in which the malfunctioning has occurred, and executes a process to separate the malfunctioned storage battery pack from the power converter 174. The separating process refers to a process to open the switch of the switch circuit 176 provided between the storage battery pack and the power converter 174. The sub-controller 176 transmits unit state data S3 (a signal S3) which afre state data of the storage battery unit to the master controller 170, and transmits unit state data S6 (a signal S6) having the same content as the signal S3 to the power management unit 32 for the power device.

Here, because the signal S1 is transmitted every time charging or discharging becomes necessary, the transmission interval of the signal S1 is sometimes a few seconds and sometimes a few tens of minutes. On the other hand, the signals S3 to S8 are transmitted at predetermined transmission intervals defined in advance. The predetermined transmission interval is determined according to the specification of the management system 28. As an example, a setting may be employed in which, in the order of the flow of the signals, the signal S5 is transmitted once every 100 ms, the signals S4, S7, and S3 are transmitted once every 1 s, the signal S6 is transmitted once every 10 s, and the signal S8 is transmitted once every one minute.

To the master controller 170, the signal S3 is transmitted from the sub-controller 176 at a frequency of, for example, once every 1 s.

To the system controller 30, the signal S8 is transmitted from the power management unit 32 for the power device at a frequency of, for example, once every one minute. The transmission timing of the signal S1 transmitted from the system controller 30 depends on the time when the charging or discharging of the electricity storage device becomes necessary; that is, the transmission timing is irregular, and, therefore, the system controller 30 does not need to frequently acquire the information of the electricity storage device 180 included in the signal S8. Because of this, the timing of transmission of the signal S8 from the power management unit 32 for the power device may be set to about once every one minute.

However, in the case where a sudden circumstance arises, if the signal S8 is transmitted with a frequency of about once every one minute, a disadvantage may occur. In consideration of this, a signal S2 having a limited transmission content is transmitted from the master controller 170 to the system controller 30. The transmission interval of the signal S2 may be set to be shorter than the transmission intervals of the signals S6 and S8, and may be set to the same transmission interval as those of the signals S3 and S5.

The "sudden circumstance" refers to, for example, a situation where the signal S3 includes information related to a failure in which the charging and discharging of the electricity storage device 180 is unexpectedly stopped and quick recovery cannot be anticipated, a situation where the signals S3 and S5 include failure information indicating that failure has occurred in the power converter 174 and the connection between the power converter 174 and the electricity storage device 180 is withheld, or the like. The transmission content of the signal S2 is information which merely notifies that a failure has occurred in the electricity storage device 180, the power converter 174, or the like, and may be such that the information related to the details and extent of the failure is not included. By appropriately transmitting the signal S2 from the master controller 170 to the system controller 30, the system controller 30 can transmit the signal S1 having a content to instruct, for example, to electrically isolate the device in which the failure has occurred from the master controller 170 without waiting to receive the signal S8.

For the signal S2, a signal indicating "no abnormality" is preferably periodically transmitted to the system controller 30 under normal circumstances. By employing a configuration where the system controller 30 returns a reception response with respect to the transmission from the signal S2 to the master controller 170, it becomes not necessary for the master controller 170 to separately transmit the above-described active/inactive checking signal with respect to the system controller 30.

### [Industrial Applicability]

The management system according to the present invention can be used for power management of a facility which consumes power.

### [Explanation of Reference Numerals]

10 FACILITY GROUP; 12 A BUILDING; 14 B BUILDING; 16 C BUILDING; 18 D BUILDING; 20 ELECTRICITY STORAGE DEVICE BUILDING; 22 EQUIPMENT FOR SUPPLYING ELECTRICITY TO VEHICLE; 24, 26 FACTORY BUILDING; 28 MANAGEMENT SYSTEM; 30 SYSTEM CONTROLLER; 32 POWER MANAGEMENT UNIT FOR POWER DEVICE; 34 CHARGE AND DISCHARGE CONTROLLER OF ELECTRICITY STORAGE DEVICE BUILDING; 36 POWER MANAGEMENT UNIT FOR D BUILDING; 38 POWER MANAGEMENT UNIT FOR KITCHEN; 40 POWER MANAGEMENT UNIT FOR SHOP; 42 POWER MANAGEMENT UNIT FOR FACTORY; 44 CENTRAL MONITORING DEVICE; 46 SEQUENCER UNIT; 48 DISPLAY UNIT; 50 EXTERNAL COMMERCIAL POWER SUPPLY; 60, 162 PHOTOVOLTAIC MODULE; 150 HUB; 152 HUB WITH OPTICAL TERMINAL STATION; 154 EQUIPMENT FOR SUPPLYING ELECTRICITY TO MOTORCYCLE BATTERY; 156 STREET LAMP; 164, 174 POWER CONVERTER; 170 MASTER CONTROLLER; 172 POWER CONVERTER MANAGEMENT UNIT; 176 SUB-CONTROLLER; 178 SWITCH CIRCUIT; 180, 186, 196 ELECTRICITY STORAGE DEVICE; 184, 194 CHARGE AND DISCHARGE CONTROLLER; 188, 198 POWER DETECTING UNIT; 190 PERSONAL COMPUTER; 192 ACCESS POINT; 200 PUBLIC LINE NETWORK; 202 SERVER; 210 CHARGE AND DISCHARGE PROGRAM MEMORY; 220 VARIOUS POWER MANAGEMENT UNITS

## Claims

1. A management system comprising:
a plurality of power management units which divide power information of a facility group including a plurality of facilities into a plurality of management areas and manage the management areas;
a power management unit for a power device, among the plurality of power management units, which manages power information related to a power-related device as the management area; and
a control device which is connected to the plurality of power management units by a communication element, which acquires the power information for each of the management areas, and which manages overall power information of the facility group based on the acquired power information, wherein
when the power information acquired from the power management unit includes failure information, the control device transmits to predetermined destinations a plurality of information having different amounts of information from each other with regard to the failure information.

2. The management system according to Claim 1, wherein
for an alert signal and detailed information having a larger amount of information than the alert signal as the plurality of information, the control device sets different destinations for the alert signal and for the detailed information.

3. The management system according to Claim 1 or 2, wherein
the control device transmits the alert signal to a power management unit for a factory among the plurality of power management units and to a display unit which displays a power management state of the facility group.

4. The management system according to Claim 2 or 3, further comprising:
a server which stores the detail information and which can be accessed by the plurality of power management units.

5. The management system according to Claim 4, wherein
the control device instructs the power management unit which has transmitted the power information including the failure information to transmit the detail information to the server.

6. The management system according to Claim 4, wherein
the server is a mail server.

7. A management system comprising:
a plurality of power management units which divide power information of a facility group including a plurality of facilities into a plurality of management areas and manage the management areas; and
a charge and discharge program memory which stores a control program which controls charging and discharging of a plurality of electricity storage devices provided in the facility group, wherein
a charge and discharge controller which controls charging and discharging of the electricity storage device downloads the control program from the charge and discharge program memory via a power management unit which manages the electricity storage device.

8. The management system according to Claim 7, wherein
the charge and discharge controller inquires the power management unit at a predefined interval, and, when there is an updated version of the control program, downloads the updated version.

9. The management system according to Claim 7 or 8, wherein
the charge and discharge program memory further stores an update history of the control program.
